(19) Europäisches Patentamt
European Patent Office
Office européen des brevets

(11) **EP 2 867 644 B1**

(12) **FASCICULE DE BREVET EUROPEEN**

(45) Date de publication et mention
de la délivrance du brevet:
**08.03.2017 Bulletin 2017/10**

(21) Numéro de dépôt: **13730241.0**

(22) Date de dépôt: **19.06.2013**

(51) Int Cl.:
***G01P 3/34*** *(2006.01)*    ***G01M 17/013*** *(2006.01)*
***G01M 9/06*** *(2006.01)*

(86) Numéro de dépôt international:
**PCT/EP2013/062695**

(87) Numéro de publication internationale:
**WO 2014/001165 (03.01.2014 Gazette 2014/01)**

(54) **PROCEDE POUR DETERMINER LE MOMENT RESISTANT AERODYNAMIQUE D'UNE ROUE**

VERFAHREN ZUR ERMITTLUNG DES AERODYNAMISCHEN MOMENTS DES WIDERSTANDS EINES RADES

METHOD FOR DETERMINING THE AERODYNAMIC MOMENT OF RESISTANCE OF A WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2012 FR 1256123**

(43) Date de publication de la demande:
**06.05.2015 Bulletin 2015/19**

(73) Titulaires:
• **Compagnie Générale des Etablissements Michelin**
  **63000 Clermont-Ferrand (FR)**
• **MICHELIN Recherche et Technique S.A.**
  **1763 Granges-Paccot (CH)**

(72) Inventeur: **GARDARIN, Benoit**
**F-63040 Clermont-Ferrand Cedex 9 (FR)**

(74) Mandataire: **Bauvir, Jacques**
**Manufacture Française des Pneumatiques Michelin**
**23, place des Carmes-Déchaux**
**63040 Clermont-Ferrand Cedex 9 (FR)**

(56) Documents cités:
**DE-A1- 19 527 742     DE-A1-102008 046 552**

**Description**

L'invention concerne un procédé pour déterminer précisément le moment résistant aérodynamique d'une roue. Ce procédé s'applique sur les véhicules de transport terrestre.

On rappelle qu'une roue est définie comme étant constituée d'une jante, d'un disque de roue et d'un pneumatique. Le pneumatique, encore appelé enveloppe, est monté sur la jante pour former une roue.

Des mesures réglementaires de consommation et de pollution sont couramment pratiquées sur les voitures légères et les utilitaires légers dans de nombreux pays. Malheureusement ces mesures ne permettent pas de déterminer précisément la force de résistance à l'avancement des pneumatiques.

Il est rappelé que la force de résistance à l'avancement induite par un pneumatique comprend les trois composantes suivantes : la traînée (ou force) de résistance au roulement, la traînée aérodynamique, et le moment résistant aérodynamique (ou brassage aérodynamique).

Aussi pour calculer ou estimer cette force de résistance à l'avancement, les praticiens réalisent des mesures, sur banc d'essai, du pneumatique monté simplement sur jante, ou recourent encore à la simulation avec l'aide de logiciels informatiques. Des exemples de procédés sont décrits, par exemple, par les documents DE19527742 et DE102008046552.

Mais ces mesures ou simulation, réalisées sur banc d'essai, ne permettent pas d'obtenir des valeurs de moment résistant aérodynamique, proches de valeurs rencontrées dans des conditions d'usage réel d'un pneumatique. En effet, les techniques de mesures actuelles effectuent uniquement une estimation du moment résistant aérodynamique par une simple mise en décélération du pneumatique monté sur jante et disposé dans un environnement ouvert, libéré de toute protection.

Des paramètres physiques, comme le moment résistant aérodynamique, font pour l'instant, l'objet d'estimations mathématiques qui restent malgré tout insatisfaisantes, car estimées de manière insuffisante.

Ainsi une mesure plus précise et plus réaliste du moment résistant aérodynamique permettrait de mieux évaluer la résistance à l'avancement induite par une roue, et par conséquent son impact sur la consommation de carburant.

Aussi, il subsiste le besoin de pouvoir disposer d'un procédé pour déterminer très précisément, de manière fiable et reproductible, le moment résistant aérodynamique d'une roue, dans des conditions similaires à celles de conditions d'utilisations usuelles.

L'invention a donc pour objet un procédé pour déterminer le moment résistant aérodynamique $M_{aéro-EM}$ d'une roue, par le calcul de la variation temporelle, du produit de la vitesse de rotation de ladite roue mise en rotation autour d'un axe et de l'inertie de ladite roue autour dudit axe, ladite roue étant équipée d'un dispositif pour relever et enregistrer les valeurs numériques de sa vitesse de rotation.

L'invention se caractérise en ce que ladite roue est protégée par un capot amovible, en ce que ladite roue, mise en contact et entraînée initialement à un temps $t_0$ par un tapis roulant, est mise hors contact dudit tapis à un temps $t_1$, postérieur à $t_0$, tout en étant constamment soumise à un écoulement d'air permettant de reproduire les effets d'un vent de travers présentant une direction principale présentant un angle compris entre -40° et +40° par rapport à celle de la roue, et en ce que les mesures de vitesse de rotation $\omega(t)$ de ladite roue, relevées en fonction du temps, sont reportées dans la formule mathématique suivante:

$$I_{EM}(d(\omega(t))/dt) = M_{aéro-EM}(t) + M_f(t) \qquad \textbf{(I)}$$

où

- $I_{EM}$ représente la valeur du moment d'inertie de la roue autour dudit axe de rotation,
- $\omega(t)$ représente la vitesse de rotation instantanée de ladite roue,
- $M_f(t)$ représente la valeur du moment de frottement du moyeu de la roue, et
- $M_{aéro-EM}(t)$ représente le moment résistant aérodynamique instantané de ladite roue.

Le procédé selon l'invention présente l'avantage de pouvoir s'appliquer à tout type de jante, d'enjoliveur ou de pneumatique, de présenter un faible coût dans sa réalisation, et d'être de mise en oeuvre simple et rapide.

Enfin, ce procédé permet de fournir rapidement et aisément des données numériques similaires à celles rencontrées sur un véhicule en situation de roulage usuelle.

La protection de la roue par un capot amovible selon le procédé de l'invention permet de reconstituer les conditions réelles de roulage d'une roue, c'est-à-dire disposer la roue dans une enceinte semi-protégée, habituellement constituée par le passage de roue d'un véhicule. Le capot selon l'invention peut présenter toutes les formes géométriques tridimensionnelles les plus proches de celles rencontrées avec les passages de roues des véhicules terrestres.

Jusqu'ici la mesure de la résistance au roulement d'un pneumatique neuf, monté sur jante et mis sous pression, est réalisée en utilisant des modèles normés, en laboratoire. Parmi ces modèles, on peut citer par exemple celui de la norme ISO/FDIS 28580 qui considère différents paramètres physiques et mathématiques afin de les mesurer ou de les calculer ; l'ensemble des résultats obtenus permettant d'évaluer et/ou de quantifier le plus précisément possible la résistance au roulement d'un pneumatique.

Le paramètre relatif à la cinématique d'un ensemble roulant d'un véhicule de transport terrestre (automobile, camionnette, poids-lourds) est constitué de deux mouvements différents : un mouvement de translation horizontal et un mouvement de rotation. Ces deux mouvements induisent des contraintes liés à l'écoulement de l'air autour du pneumatique, puisque l'écoulement de l'air génère à la surface d'un pneumatique un champ de pressions et un champ de frottement visqueux.

Les contraintes aérodynamiques qui s'exercent sur de tels ensembles roulants entraînent l'apparition, d'une part, d'un effort résistant longitudinal de traînée et, d'autre part, d'un moment résistant aérodynamique qui s'oppose à la rotation des roues.

Si l'effort longitudinal résistant de traînée est aisément évalué par les modèles mathématiques actuels qui utilisent les mesures obtenues en soufflerie, le moment résistant aérodynamique n'est pas pris en considération lors des mesures en soufflerie. Cette résultante, étant jusqu'ici considérée comme une composante parasite, influence toutefois de manière non négligeable les résultats de consommation de carburant lié à la résistance à l'avancement de la roue.

Le procédé selon l'invention, de réalisation simple, permet de quantifier ce moment résistant aérodynamique dans des conditions similaires à celles rencontrées par une roue en situation de roulage réel.

En effet, le procédé selon l'invention dispose la roue dans des conditions très proches des conditions de roulage usuelles puisque la roue est, d'une part, protégée par un capot amovible, destiné à reproduire les effets protecteur d'un passage de roue de véhicule et, d'autre part, est soumise à un écoulement d'air.

On ne retrouve pas une telle situation dans l'application des modèles normés en laboratoire puisque la roue est disposée dans un environnement ouvert sans aucun protection (du fait de l'absence de capot) et n'est pas soumise à un écoulement d'air, excepté celui qu'elle génère par son propre fonctionnement.

Ainsi les contraintes, liées aux frottements et aux pressions, provoquant la naissance du moment résistant aérodynamique, seront différentes dans le procédé selon l'invention et dans les modes de mesure utilisés jusqu'ici.

De manière préférée, l'écoulement d'air utilisé selon le procédé de l'invention présente une direction principale sensiblement parallèle à celle de la roue.

L'écoulement d'air peut présenter une direction principale présentant un angle compris entre -40° et +40° par rapport à celle de la roue. Cette solution permet de reproduire le plus exactement possible les effets d'un vent de travers, avant ou arrière, en situation de roulage réelle.

De manière préférée, pour mettre en oeuvre ce procédé, l'axe de la roue reste fixe par rapport au sol immobile. Ceci signifie qu'il n'y a pas de mouvement relatif entre la roue et le tapis roulant, et donc que l'axe de la roue se déplace de la même manière que celle du tapis roulant.

De manière préférée, l'écoulement d'air présente une vitesse égale ou différente de celle du tapis roulant.

La roue comprend de préférence au moins un moyen de maintien de la suspension de la roue.

L'invention va maintenant être décrite à l'aide des exemples et des figures qui suivent et qui ne sont nullement limitatifs, et dans lesquels :

- la figure 1 représente la variation du produit $[I_{EM} \, \omega(t)]$ en fonction du temps, selon l'invention, pour deux roues différentes, l'une comprenant un pneumatique à flanc lisse, et l'autre un pneumatique à flanc recouverts d'éléments rugueux,
- la figure 2 représente la variation du moment résistant aérodynamique instantané $M_{aéro-EM}(t)$ en fonction du rapport établi entre la vitesse d'écoulement d'air et la vitesse de la roue, selon le procédé de l'invention.

Pour mettre en oeuvre ce procédé, une roue est placée sur un tapis roulant dans une soufflerie aérodynamique. La roue est maintenue en contact avec le tapis roulant. La roue est reliée à un moyen de mise hors contact avec le tapis roulant. Un moyen de maintien de la roue en chacune de ses positions permet de la stabiliser lors des mesures.

La roue est équipée d'un dispositif destiné à relever et à enregistrer les valeurs numériques de sa vitesse de rotation $\omega(t)$.

Après avoir fait rouler la roue sur un tapis roulant pendant une durée donnée, la roue est extrait du tapis de façon à ce qu'elle quitte le tapis roulant. La roue évolue alors librement, simplement soumise à l'écoulement d'air de la soufflerie. La vitesse de rotation de la roue est enregistrée tout au long de la manipulation.

Selon une variante de réalisation du procédé selon l'invention, la roue peut être montée sur un véhicule qui sera alors fixé au sol à l'aide de mâts. Un moyen d'élévation du véhicule permet d'extraire le véhicule du tapis roulant, permettant ainsi à la roue de poursuivre sa rotation avec l'influence unique de la soufflerie. La fixation du véhicule au sol permet, d'une part, d'imposer l'assiette du véhicule, et, d'autre part, de le stabiliser lors de son élévation. Les roues montés sur le véhicule sont initialement mises en contact avec un tapis roulant, destiné à mettre la roue à une vitesse de rotation $V_0$ souhaitée. La soufflerie soumet le véhicule à un écoulement d'air ayant la même vitesse $V_0$.

L'application de la formule mathématique (I) ci-dessous permet d'obtenir la valeur du moment résistant aéro-dynamiqe $M_{\text{aéro-EM}}(t)$ de la roue en fonction du temps selon la formule mathématique (I) suivante :

$$I_{\text{EM}}(d(\omega(t))/dt) = M_{\text{aéro-EM}}(t) + M_f(t) \qquad (I)$$

$I_{\text{EM}}$, qui représente la valeur du moment d'inertie de la roue, peut être mesurée par exemple au moyen d'un pendule de torsion.

$M_f(t)$, qui représente la valeur du moment de frottement du moyeu de la roue, peut être calculée, par exemple, à partir des caractéristiques techniques fournies par le constructeur des roulements.

La valeur $(d(\omega)/dt)$ pour $t=t_0$ (c'est-à-dire lorsque la roue quitte le tapis roulant) est obtenue à partir de l'enregistrement de la vitesse de rotation en fonction du temps.

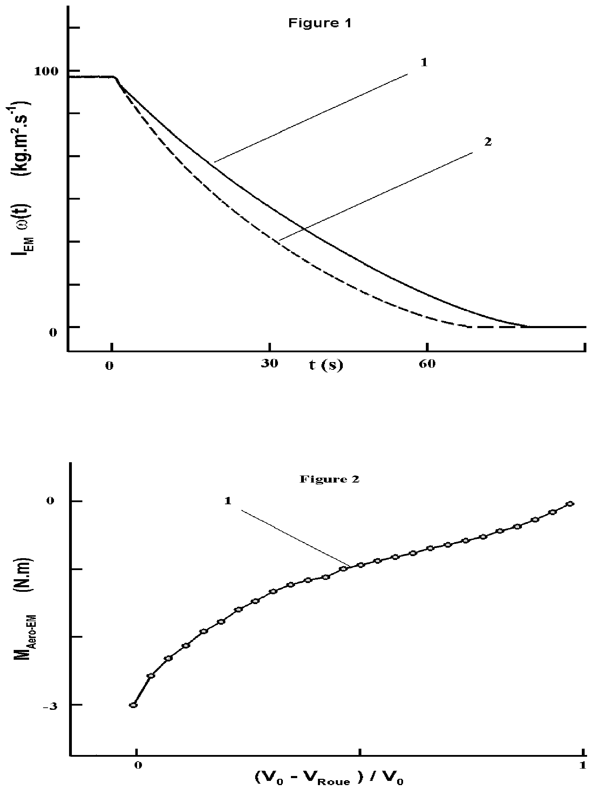

La figure 1 montre les résultats comparant la variation des moments résistants aérodynamiques d'un pneumatique à flanc lisse et d'un pneumatique à flancs recouverts d'éléments rugueux, tous deux montés sur une jante identique. Ces deux pneumatiques sont montés sur le côté avant droit d'un véhicule de tourisme. La vitesse $V_0$ des roues entraînées par le tapis roulant est égale à 120km/h. La soufflerie génère un écoulement d'air ayant une vitesse égale à 120km/h.

Sur cette figure 1, la courbe 1 correspond au pneumatique à flanc lisse et la courbe 2 au pneumatique à flancs recouverts d'éléments rugueux. Les deux roues sont constituées de jante identique. La figure 1 montre que la vitesse de rotation de chaque pneumatique monté sur jante n'évolue pas de la même manière. Les éléments rugueux sont définis comme étant des éléments constitués de gomme de caoutchouc de forme sensiblement cylindrique, de hauteur égale à environ 4mm et de diamètre égale à environ 4mm. Dans le présent cas, on a disposé régulièrement 250 éléments sur chacun des deux flancs.

En effet, le pneumatique à flancs rugueux induit une décélération plus rapide que le pneumatique à flanc lisse, du fait de l'existence de contraintes pariétales plus élevées sur le pneumatique à flancs rugueux.

A l'instant $t=t_0$, la différence de comportement de chaque type de pneumatique montre un écart de brassage aérodynamique d'environ 1N.m. Cette mesure peut être considérée comme reproductible du fait d'un écart type égale à 0,01N.m.

Cette différence de valeur de moment résistant aérodynamique est équivalente, pour un véhicule de tourisme équipé de quatre roues, à une différence de traînée aérodynamique d'environ 3% de la traînée totale du véhicule.

Cette différence de valeur du moment résistant aérodynamique induit, pour un véhicule de tourisme équipé de quatre roues, une différence de consommation de carburant équivalente à une différence de traînée aérodynamique d'environ 3% de la traînée de frottement aérodynamique totale du véhicule.

La figure 2 correspond à une situation où la direction de l'écoulement d'air principal est alignée avec celle de la roue, mais où la vitesse de l'écoulement d'air est différente de celle de la roue. En d'autres termes, la vitesse $V_0$ de la soufflerie est constante et est toujours égale à 120km/h, et la vitesse de la roue $V_{\text{roue}}$ est variable, et passe progressivement de 120km/h à 0km/h.

La figure 2 correspond à la situation réelle où la roue, protégée par un capot, subit un vent de face puisque $V_0 > V_{\text{roue}}$.

Le moment résistant aérodynamique $M_{\text{aéro-EM}}$ est mesuré pour différentes valeur de la vitesse de roue. On trace ensuite chaque valeur de $M_{\text{aéro-EM}}$ en fonction du rapport $[(V_0 - V_{\text{roue}})/V_0]$ qui vaut zéro quand $V_{\text{roue}} = V_0 = 120$km/h, et qui vaut un quand $V_{\text{roue}}=0$ et $V_0 = 120$km/h. On obtient alors la courbe 1 représentée sur la figure 2.

Comme le montre la courbe 1 de la figure 2, on peut dire que le moment résistant aérodynamique subit par un véhicule roulant à 60km/h, et subissant un vent de face ayant également une vitesse de 60km/h, est plus faible (1N.m environ, en valeur absolue, pour $[(V_0 - V_{\text{roue}})/V_0] = 0,5$) que le moment résistant aérodynamique subit par un même véhicule roulant à 120km/h en l'absence de vent extérieur (3N.m environ, en valeur absolue, pour $[(V_0 - V_{\text{roue}})/V_0] = 0$) malgré que le vent relatif soit le même dans les deux cas, à savoir 120km/h.

**Revendications**

1. - Procédé pour déterminer le moment résistant aérodynamique $M_{\text{aéro-EM}}$ d'une roue, par le calcul de la variation temporelle, du produit de la vitesse de rotation de ladite roue mise en rotation autour d'un axe et de l'inertie de ladite roue autour dudit axe, ladite roue étant équipée d'un dispositif pour relever et enregistrer les valeurs numériques de sa vitesse de rotation, **caractérisé en ce que** ladite roue est protégée par un capot amovible, **en ce que** ladite roue, mise en contact et entraînée initialement à un temps $t_0$ par un tapis roulant, est mise hors contact dudit tapis à un temps $t_1$, postérieur à $t_0$, tout en étant constamment soumise à un écoulement d'air permettant de reproduire les effets d'un vent de travers présentant une direction principale présentant un angle compris entre -40° et +40° par rapport à celle de la roue, et **en ce que** les mesures de vitesse de rotation $\omega(t)$ de ladite roue, relevées en fonction du temps, sont reportées dans la formule mathématique suivante :

$$I_{EM}(d\omega(t)/dt) = M_{\text{aéro-EM}}(t) + M_f(t) \qquad \textbf{(I)}$$

où

- $I_{EM}$ représente la valeur du moment d'inertie de la roue autour dudit axe de rotation,
- $\omega(t)$ représente la vitesse de rotation instantanée de ladite roue,
- $M_f(t)$ représente la valeur du moment de frottement du moyeu de la roue, et
- $M_{\text{aéro-EM}}(t)$ représente le moment aérodynamique instantané de ladite roue.

2.   - Procédé selon la revendication 1, **caractérisé en ce que** l'écoulement d'air présente une direction principale sensiblement parallèle à celle de la roue.

3.   - Procédé selon l'une des revendications précédentes, **caractérisé en ce que** l'axe de la roue reste fixe par rapport au sol.

4.   - Procédé selon l'une des revendications précédentes, **caractérisé en ce que** l'écoulement d'air présente une vitesse égale à celle du tapis roulant.

5.   - Procédé selon l'une des revendications précédentes, **caractérisé en ce que** l'écoulement d'air présente une vitesse différente de celle du tapis roulant.

6.   - Procédé selon l'une des revendications précédentes, **caractérisé en ce que** la roue comprend au moins un moyen de maintien de la suspension de la roue.

## Patentansprüche

1.   Verfahren zum Bestimmen des aerodynamischen Widerstandsmoments $M_{\text{aéro-EM}}$ eines Rades durch die Berechnung der zeitlichen Änderung des Produkts der Drehzahl des in Rotation um eine Achse versetzten Rades und der Trägheit des Rades um diese Achse, wobei das Rad mit einer Vorrichtung zum Erfassen und Aufzeichnen der numerischen Werte seiner Drehzahl ausgestattet ist, **dadurch gekennzeichnet, dass** das Rad durch eine abnehmbare Haube geschützt wird, dadurch, dass das Rad, das anfänglich zu einem Zeitpunkt $t_0$ mit einem Laufband in Kontakt gebracht und von diesem angetrieben wird, zu einem Zeitpunkt $t_1$, der nach $t_0$ liegt, außer Kontakt mit dem Laufband gebracht wird, wobei es zugleich ständig einer Luftströmung ausgesetzt wird, die es ermöglicht, die Wirkungen eines Seitenwindes zu reproduzieren, der eine Hauptrichtung aufweist, die einen Winkel zwischen -40° und +40° bezüglich derjenigen des Rades aufweist, und dadurch, dass die Messwerte der Drehzahl $\omega(t)$ des Rades, die in Abhängigkeit von der Zeit erfasst werden, in die folgende mathematische Formel eingesetzt werden:

$$I_{EM}(d\omega(t)/dt) = M_{\text{aéro-EM}}(t) + M_f(t), \qquad (I)$$

wobei

- $I_{EM}$ den Wert des Trägheitsmoments des Rades um die Drehachse bezeichnet,
- $\omega(t)$ die momentane Drehzahl des Rades bezeichnet,
- $M_f(t)$ den Wert des Reibungsmoments der Nabe des Rades bezeichnet, und
- $M_{\text{aéro-EM}}(t)$ das momentane aerodynamische Moment des Rades bezeichnet.

2.   Verfahren nach Anspruch 1, **dadurch gekennzeichnet, dass** die Luftströmung eine Hauptrichtung aufweist, die im Wesentlichen parallel zu derjenigen des Rades ist.

3. Verfahren nach einem der vorhergehenden Ansprüche, **dadurch gekennzeichnet, dass** die Achse des Rades bezüglich des Bodens feststehend bleibt.

4. Verfahren nach einem der vorhergehenden Ansprüche, **dadurch gekennzeichnet, dass** die Luftströmung eine Geschwindigkeit aufweist, die gleich derjenigen des Laufbandes ist.

5. Verfahren nach einem der vorhergehenden Ansprüche, **dadurch gekennzeichnet, dass** die Luftströmung eine Geschwindigkeit aufweist, die von derjenigen des Laufbandes verschieden ist.

6. Verfahren nach einem der vorhergehenden Ansprüche, **dadurch gekennzeichnet, dass** das Rad wenigstens ein Mittel zum Halten der Aufhängung des Rades umfasst.

**Claims**

1. Method for determining the aerodynamique moment of resistance $M_{\text{aéro-EM}}$ of a wheel by calculating the variation with respect to time, of the product of the rotational speed of the said wheel set in rotation about an axis and of the inertia of the said wheel about the said axis, the said wheel being equipped with a device for picking off and recording the numerical values of its rotational speed, **characterized in that** the said wheel is protected by a removable cap, **in that** the said wheel, set in contact with and initially at a time $t_0$ driven by, a rolling road is taken out of contact with the said road at a time $t_1$ subsequent to $t_0$, while at the same time continuing to be subjected to a flow of air which makes it possible to reproduce the effects of a crosswind having a main direction at an angle of between -40° and +40° with respect to that of the wheel, and **in that** the measurements of the rotational speed $\omega(t)$ of the said wheel, picked up as a function of time, are input into the following mathematical formula :

$$I_{\text{EM}}(d\omega(t)/dt) = M_{\text{aero-EM}}(t) + M_f(t)$$

**(I)**

where

- $I_{\text{EM}}$ represents the value of the moment of inertia of the wheel about the said axis of rotation,
- $\omega(t)$ represents the instantaneous rotational speed of the said wheel,
- $M_f(t)$ represents the value of the moment of friction of the hub of the wheel, and
- $M_{\text{aero-EM}}(t)$ represents the instantaneous aerodynamic moment of the said wheel.

2. Method according to Claim 1, **characterized in that** the flow of air having a main direction substantially parallel to that of the wheel.

3. Method according to either of the preceding claims, **characterized in that** the axis of the wheel remains fixed relative to the ground.

4. Method according to one of the preceding claims, **characterized in that** the flow of air has a speed equal to that of the rolling road.

5. Method according to one of the preceding claims, **characterized in that** the flow of air has a speed different from that of the rolling road.

6. Method according to one of the preceding claims, **characterized in that** the wheel comprises at least one means of holding the wheel suspension.

**Figure 1**

**Figure 2**

**RÉFÉRENCES CITÉES DANS LA DESCRIPTION**

**Documents brevets cités dans la description**

- DE 19527742

- DE 102008046552